# NEW EUROPEAN PATENT SPECIFICATION

(11) **EP 0 592 555 B2**
(45) Date of publication and mention of the opposition decision: **07.07.1999**
(45) Mention of the grant of the patent: 20.03.1996
(21) Application number: 92914847.6
(22) Date of filing: 02.07.1992
(51) Int. Cl.: C09K 5/00

(54) **AZEOTROPIC OR AZEOTROPE-LIKE COMPOSITIONS OF PENTAFLUOROETHANE AND PROPANE OR ISOBUTANE**
AZEOTROPE UND AZEOTROPARTIGE ZUSAMMENSETZUNGEN VON PENTAFLUORETHAN UND PROPAN ODER ISOBUTHAN
COMPOSITIONS AZEOTROPES OU DE TYPE AZEOTROPE DE PENTAFLUOROETHANE ET DE PROPANE OU D'ISOBUTANE

(30) Priority: 03.07.1991 US 725475
(43) Date of publication of application: 20.04.1994
(73) Proprietor: E.I. DU PONT DE NEMOURS AND COMPANY, Wilmington Delaware 19898 (US)
(72) Inventor: SHIFLETT, Mark, Brandon, Newark, DE 19711 (US); YOKOZEKI, Akimichi, Greenville, DE 19807 (US); BORCHARDT, HANS, J., Townsend, DE 19734 (US)
(74) Representative: Woodcraft, David Charles
(86) International application number: US9205445
(87) International publication number: WO9301152

(56) References cited:
- EP-A- 0 403 095
- EP-A- 0 419 042
- EP-A- 0 568 115
- GB-A- 2 247 462
- GB-A- 8 920 634
- RESEARCH DISCLOSURE March 1977, NO. 15505 'azeotropes comprising hydrogen- containing fluorocarbons and hydrocarbons'
- PATENT ABSTRACTS OF JAPAN vol. 13, no. 394 31 August 1989

## Description

### FIELD OF THE INVENTION

This invention relates to mixtures of fluorinated hydrocarbons and more specifically relates to constant boiling mixtures comprising pentafluoroethane and propane or isobutane. Such mixtures are useful as refrigerants, aerosol propellants, heat transfer media, gaseous dielectrics, fire extinguishing agents, expansion agents for polyolefins and polyurethanes and as power cycle working fluids. These mixtures are potentially environmentally safe substitutes for Refrigerant-502 (R-502), which is a commercial, binary-azeotropic refrigerant.

### BACKGROUND OF THE INVENTION

In the early 1970s, concem began to be expressed that the stratospheric ozone layer (which provides protection against penetration of the earth's atmosphere by ultraviolet radiation) was being depleted by chlorine atoms introduced to the atmosphere from the release of fully halogenated chlorofluoro-carbons. These chlorofluorocarbons are used as propellants in aerosols, as blowing agents for foams, as refrigerants and as cleaning/drying solvent systems. Because of the great chemical stability of fully halogenated chlorofluorocarbons, according to the ozone depletion theory, these compounds do not decompose in the earth's atmosphere but reach the stratosphere where they slowly degrade, liberating chlorine atoms which in turn react with the ozone.

During the period of 1978-1987, much research was conducted to study the ozone depletion theory. Because of the complexity of atmospheric chemistry, many questions relating to this theory remain unanswered. However, assuming the theory to be valid, the health risks which would result from depletion of the ozone layer are significant. This, coupled with the fact that worldwide production of chlorofluorocarbons has increased, has resulted in international efforts to reduce chlorofluorocarbon use. Particularly, in September 1987, the United Nations, through its Environment Programme (UNEP) issued a tentative proposal calling for a 50 percent reduction in worldwide production of fully halogenated chlorofluoro-carbons by the year 1998. This proposal was ratified January 1, 1989 and became effective on July 1, 1989.

Because of this proposed reduction in availa-bility of fully halogenated chlorofluorocarbons such as CFC-11, CFC-12 and R-502, altemative, more environ-mentally acceptable products are urgently needed.

As early as the 1970's with the initial emergence of the ozone depletion theory, it was known that the introduction of hydrogen into previously fully halo-genated chlorofluorocarbons markedly reduced the chemical stability of these compounds. Hence, these now destabilized compounds would be expected to degrade in the atmosphere and not reach the stratosphere and the ozone layer. The accompanying Table 1 lists the ozone depletion potential of some fully and partially halogenated halocarbons. Halocarbon Global Warming Potential data (potential for reflecting infrared radiation (heat) back to earth and thereby raising the earth's surface temperature) are also shown.

**TABLE 1**

| OZONE DEPLETION AND GREENHOUSE POTENTIALS | | |
|---|---|---|
| Refrigerant | Ozone Depletion Potential | Halocarbon Global Warming Potential |
| CFC-11 (CFCl₃) | 1.0 | 1.0 |
| CFC-12 (CF2CL₂) | 1.0 | 3.0 |
| HFC-125 (CF₃CHF₂) | 0.0 | 0.58 |
| R-502 | 0.23 | 4.0 |

Propane and isobutane do not contain chlorine or bromine, and are therefore zero ozone depleters.

There is a limit to the number of single fluorinated hydrocarbon substances which could be environmentally safe materials. Mixtures of known materials, however, might be used if the desired combination of properties could be found in a given mixture. Simple mixtures, however, create problems in design and operation of refrigeration and other equipment because of component segregation in both the vapor and liquid phases. To avoid component segregation problems, it is particularly desirable to discover new azeotropic or constant boiling fluorocarbon mixtures. Such mixtures do not suffer from component segregation problems.

Unfortunately, as recognized in the art, it is not possible to predict the formation of azeotropes, which complicates the search for novel azeotropic compositions that possess the desired combination of properties.

EP-A-0419042 discloses ternary mixtures of chlorodifluoromethane (R-22), pentafluoroethane (R-125) and propane. This document does not disclose binary mixtures of R-125 and propane nor suggest that binary mixtures could form an azeotrope which would show increased efficiency and heat capacity.

### SUMMARY OF THE INVENTION

The present invention relates to the discovery of binary azeotropic or azeotrope-like compositions comprising effective amounts of pentafluoroethane (HFC-125) and propane, and azeotropic or azeotrope-like compositions comprising effective amounts of pentafluoroethane and isobutane. One way to define the invention is in terms of weight percents of the components. This invention includes azeotropic or azeotrope-like compositions of pentafluoroethane and propane consisting of about 65 to 99 weight percent of pentafluoroethane and about 1 to 35 weight percent of propane, and azeotropic or azeotrope-like compositions of pentafluoroethane and isobutane comprising about 90 to 99 weight percent pentafluoroethane and about 1 to 10 weight percent isobutane.

Another way to define the invention is as a binary azeotropic or azeotrope-like composition that comprises effective amounts of pentafluoroethane and propane, or an azeotropic or azeotrope-like composition comprising effective amounts of pentafluoroethane and isobutane, such that the difference between the dew point temperature and the bubble point temperature of the composition is less than or equal to one degree Celsius.

Still another way to define the invention is as a binary composition that comprises effective amounts of pentafluoroethane and propane, or a composition comprising effective amounts of pentafluoroethane and isobutane, such that after 50 weight percent of the composition is removed, such as by evaporation or boiling off, the difference in vapor pressure between the original composition of the remaining composition is less than 10%.

### DETAILED DESCRIPTION

One way to define the invention is in terms of weight percents of the components. Constant-boiling, azeotropic or azeotrope-like compositions of pentafluoroethane and propane consist in about 65 to 99 weight percent pentafluoroethane and about 1 to 35 weight percent propane. A preferred composition consists essentially of about 75 to 99 weight percent pentafluoroethane and about 1 to 25 weight percent propane. A more preferred composition of the invention is the azeotrope, which consists essentially of about 79.4 weight percent pentafluoroethane (CF₃-CHF₂, boiling point =48.5°C) and about 20.6 weight percent propane (CH₃CH₂CH_{3,} bolling point = -42.1°C), and which boils at -14°C at 521.2 kPa (75.6 psia.).

The constant-boiling, azeotropic or azeotrope-like compositions of pentafluoroethane and isobutane comprise about 90 to 99 weight percent pentafluoroethane and about 1 to 10 weight percent isobutane. A preferred composition comprises about 94 to 99 weight percent pentafluoroethane and about 1 to 6 weight percent isobutane. A more preferred composition of the invention is the azeotrope, which comprises about 983 weight percent pentafluoroethane (CF₂-CHF₂, boiling point = -48.5°C) and about 1.7 weight percent isobutane ((CHl₃)₃CH, boiling point = -11.7°C), and which boils at 11-2°C at 937.0 kPa (135.9 psia.).

It is recognized in the art that a small difference between the dew point temperature and the bubble point temperature of a composition at a particular pressure is an indication that the composition is azeotropic or azeotrope-like. By a "small" difference is meant a difference in dew point temperature and bubble point temperature of less than or equal to one degree Celsius. It has been unexpectedly found that compositions some distance away from the true azeotropes of HFC-125 and propane or HFC-125 and isobutane have differences in dew point and bubble point temperatures of less than or equal to one degree Celsius.

Therefore, included in this invention are binary mixtures of effective amounts of HFC-125 and propane or mixtures of effective amounts of HFC-125 and isobutane such that the mixtures have a difference in dew point temperature and bubble point temperature of less than or equal to one degree Celsius.

It is also recognized in the art, as discussed in U.S. Patent No. 4,810,403, the text of which is incorporated herein by reference, that a mixture is azeotropic or azeotrope-like if, after 50 wt.% of the mixture is removed, such as by evaporation or boiling off, the difference in vapor pressure between the original mixture and the mixture remaining after 50 wt.% of the original has been removed is less than 10%, when measured in absolute units. By absolute units is meant measurements of pressure in, for example, psia, atmospheres, bars, torr, dynes per square centimeter, millimeters of mercury, inches of water, and other equivalent terms well known in the art.

Therefore, included in this invention are binary mixtures of effective amounts of HFC-125 and propane or mixtures of effective amounts of HFC-125 and isobutane such that after 50 wt.% of an original mixture is evaporated or boiled off to produce a remaining mixture, the difference in the vapor pressure between the original mixture and the remaining mixture is 10% or less.

For purposes of this invention, "effective amount" is defined as the amount of each component of the inventive admixture which, when combined, results in the formation of an azeotropic or azeotrope-like composition. This definition includes the amounts of each component, which amounts may vary depending upon the pressure applied to the composition so long as the azeotropic or azeotrope-like compositions continue to exist at the different pressures, but with possible different boiling points. Therefore, effective amount includes the amounts,such as may be expressed in weight percentages, of each component of the compositions of the instant invention which form azeotropic or azeotrope-like compositions at pressures other than the pressures described herein.

For the purpose of this discussion, azeotropic or constant-boiling is intended to mean also essentially azeotropic or essentially-constant boiling. In other words, included within the meaning of these terms are not only the true azeotropes described above, but also other compositions containing the same components in different proportions, which are true azeotropes at other temperatures and pressures, as well as those equivalent compositions which are part of the same azeotropic system and are azeotrope-like in their properties. As is well recognized in this art, there is a range of compositions which contain the same components as the azeotrope, which not only will exhibit essentially equivalent properties for refrigeration and other applications, but which will also exhibit essentially equivalent properties to the true azeotropic composition in terms of constant boiling characteristics or tendency not to segregate or fractionate on boiling.

It is possible to characterize, in effect, a constant boiling admixture which may appear under many guises, depending upon the conditions chosen, by any of several criteria:
* The composition can be defined as an azeotrope of A, B, C (and D...) since the very term "azeotrope" is at once both definitive and limitative, and requires that effective amounts of A, B, C (and D...) form this unique composition of matter which is a constant boiling admixture.
* It is well known by those skilled in the art, that, at different pressures, the composition of a given azeotrope will vary at least to some degree, and changes in pressure will also change, at least to some degree, the boiling point temperature. Thus, an azeotrope of A, B, C (and D...) represents a unique type of relationship but with a variable composition which depends on temperature and/or pressure. Therefore, compositional ranges, rather than fixed compositions, are often used to define azeotropes.
* The composition can be defined as a particular weight percent relationship or mole percent relationship of A, B, C (and D...), while recognizing that such specific values point out only one particular such relationship and that in actuality, a series of such relationships, represented by A, B, C (and D...) actually exist for a given azeotrope, varied by the influence of pressure.
* An azeotrope of A, B, C (and D...) can be characterized by defining the composition as an azeotrope characterized by a boiling point at a given pressure, thus giving identifying characteristics without unduly limiting the scope of the invention by a specific numerical composition, which is limited by and is only as accurate as the analytical equipment available.

Binary mixtures of about 65 to 99 weight percent HFC-125 and about 1 to 35 weight percent propane and binary mixtures of 90 to 99 weight percent HFC-125 and 1 to 10 weight percent isobutane are characterized as azeotropic or azeotrope-like in that mixtures within these ranges exhibit a substantially constant boiling point at constant pressure. Being substantially constant boiling, the mixtures do not tend to fractionate to any great extent upon evaporation. After evaporation, only a small difference exists between the composition of the vapor and the composition of the initial liquid phase. This difference is such that the compositions of the vapor and liquid phases are considered substantially identical. Accordingly, any mixture within this range exhibits properties which are characteristic of a true binary azeotrope.

The azeotropic or azeotrope-like compositions of the instant invention can be prepared by any convenient method including mixing or combining the desired component amounts. A preferred method is to weigh the desired component amounts and thereafter combine them in an appropriate container.

Specific examples illustrating the invention are given below. Unless otherwise stated therein, all percentages are by weight. It is to be understood that these examples are merely illustrative and in no way are to be interpreted as limiting the scope of the invention.

### HFC-125 and Propane

### EXAMPLE 1

A phase study was made on pentafluoroethane and propane, wherein the composition was varied and the vapor pressures measured, at a constant temperature of -14C. An azeotropic composition was obtained as evidenced by the maximum vapor pressure observed and was identified as follows:
- Pentafluoroethane = 79.4 weight percent
- Propane = 20.6 weight percent
- Vapor pressure = 521.2 kPa (75.6 psia) at -14°C

### EXAMPLE 2

The novel azeotropic or azeotrope-like compositions of the present invention exhibit a higher vapor pressure than either of the two constituents and exhibit dew and bubble points with virtually no temperature differentials. As is well known in the art, a small difference between dew point and bubble point temperatures is an indication of the azeotrope-like behavior of mixtures.

A study of dew point and bubble point temperatures for various mixtures indicates that the differences in dew point and bubble point temperatures of the azeotrope-like mixtures of the invention are very small with respect to the differences in dew point and bubble point temperatures of several known, nonazeotropic, binary compositions, namely, (50+50) weight percent mixtures of pentafluoroethane (HFC-125) and 1,1,1 2-tetrafluoroethane (HFC-134a), and (50+50) weight percent mixtures of chlorodifluoromethane (HCFC-22) and 1-chloro-1,1-fluoroethane (HCFC-142b). These data confirm the azeotrope-like behavior of the compositions of this invention.

**TABLE 2**

| Temperatures (°C) at 101.325 kPa (14.696 psia) | | | |
|---|---|---|---|
| Refrigerant Composition | Dew Point | Bubble Point | ΔT |
| HFC-125 + HFC-134a (50 + 50) | -30.5 | -35.7 | 5.2 |
| HFC-22 + HCFC-142b (50 + 50) | -18.6 | -28.3 | 9.7 |
| HFC-125 + Propane (99 + 1) | -50.6 | -49.8 | 0.8 |
| HFC-125 + Propane (95 + 5) | -53.5 | -52.6 | 0.9 |
| HFC-125 + Propane (90 + 10) | -53.8 | -54.3 | 0.5 |
| HFC-125 + Propane (85 + 15) | -54.2 | -53.5 | 0.7 |
| HFC-125 + Propane (79.4 + 20.6) | -54.3 | -54.3 | 0.0 |
| HFC-125 + Propane (75 + 25) | -54.3 | -54.2 | 0.1 |

Compositions of about 75 to 99 weight percent pentafluoroethane and 1 to 25 weight percent propane exhibit a difference in dew and bubble point temperatures of less than 1°C at atmospheric pressure, which indicates that the compositions are essentially constant-boiling.

The more preferred composition according to the instant invention is the azeotrope which comprises 79.4 weight percent pentafluoroethane and 20.6 weight percent propane, and which boils at -14°C at 521.2 kPa (75.6 psia).

### Example 3

A study compares the refrigeration properties of the azeotropic mixtures of the invention with Refrigerant-502 and pentafluoroethane (HFC-125). The refrigeration capacity is based on a compressor with a fixed displacement of 0.00165m³/s (3.5 cubic feet per minute). The data are based on a refrigeration cycle with a suction-line heat exchanger.

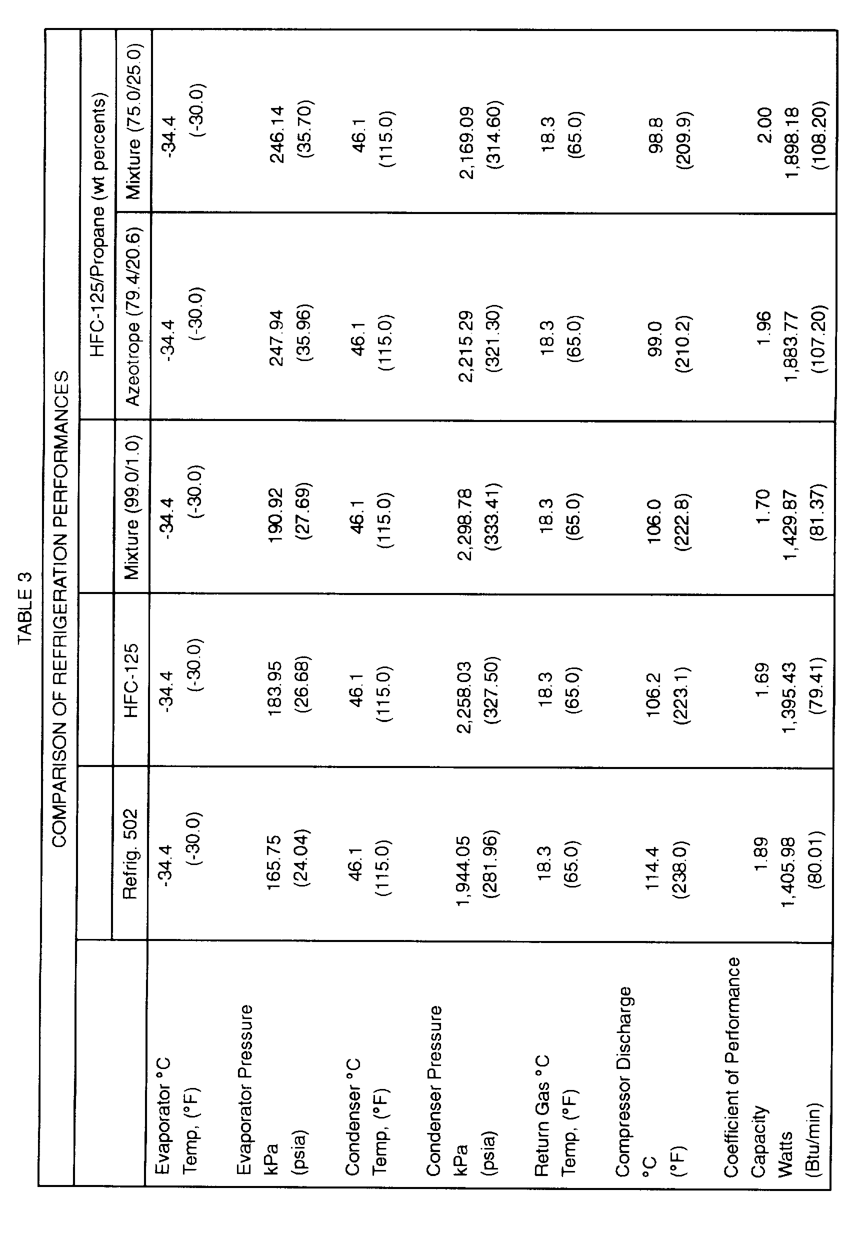

Capacity is intended to mean the change in enthalpy of the refrigerant in the evaporator per 0.4536 kg (one pound) of refrigerant circulated, i.e., the heat removed by the refrigerant in the evaporator per time.

Coefficient of performance (COP) is intended to mean the ratio of the capacity to the compressor work. It is a measure of refrigerant energy efficiency.

For a refrigeration cycle typified by the above conditions, both the COP and capacity increase by adding propane to HFC-125. Also, the discharge temperature from the compressor decreases by adding propane, which is important for increasing the lifetime of the compressor. These results show that mixtures of HFC-125 and propane improve the capacity, energy efficiency, and discharge temperature of a refrigeration cycle when compared to HFC-125 alone.

### EXAMPLE 4

A phase study on pentafluoroethane and propane verifies minimal fractionation and change in vapor pressure and composition during a vapor loss at 25°C. Initial liquid (IQ), final liquid (FQ), vapor composition (1-6), vapor pressure, and change in vapor pressure from the initial vapor pressure are shown for four mixtures.

**TABLE 4**

| Sample | % Loss | Comp. (wt%) | | Vapor Press. | | Press. Change |
|---|---|---|---|---|---|---|
| | | HFC-125 | Propane | (PSIA) | kPa | (%) |
| IQ | 0 | 90.0 | 10.0 | (233.5) | 1.609.9 | 0 |
| 1 | 0 | 86.3 | 13.7 | (233.5) | 1.609.9 | 0 |
| 2 | 10 | 86.6 | 13.4 | (233.1) | 1.607.2 | 0.2 |
| 3 | 20 | 86.9 | 13.1 | (232.6) | 1.603.7 | 0.4 |
| 4 | 30 | 87.3 | 12.7 | (231.9) | 1.598.9 | 0.7 |
| 5 | 40 | 87.9 | 12.1 | (231.0) | 1.592.7 | 1.1 |
| 6 | 50 | 88.5 | 11.5 | (229.9) | 1.585.1 | 1.5 |
| FQ | 50 | 92.6 | 7.4 | (229.9) | 1.585.1 | 1.5 |

This mixture of 90% HFC-125 and 10% propane is essentially constant-boiling and exhibits a 1.5% change in vapor pressure after 50% of the original mixture evaporates. Also, the propane concentration decreases so that if the original mixture were nonflammable then the mixture would remain nonflammable.

**TABLE 5**

| Sample | % Loss | Comp. (Wt%) | | Vapor Press. | | Press. Change |
|---|---|---|---|---|---|---|
| | | HFC-125 | Propane | (psia) | kPa | (%) |
| IQ | 0 | 95.0 | 5.0 | (224.3) | 1.546.5 | 0 |
| 1 | 0 | 91.2 | 8.8 | (224.3) | 1.546.5 | 0 |
| 2 | 10 | 91.7 | 8.3 | (223.1) | 1,538.2 | 0.5 |
| 3 | 20 | 92.2 | 7.8 | (221.8) | 1,529.3 | 1.1 |
| 4 | 30 | 92.8 | 7.2 | (220.2) | 1,518.2 | 1.8 |
| 5 | 40 | 93.6 | 6.4 | (218.2) | 1,504.4 | 2.7 |
| 6 | 50 | 94.4 | 5.6 | (216.0) | 1,489.3 | 3.7 |
| FQ | 50 | 97.3 | 2.7 | (216.0) | 1,489.3 | 3.7 |

This mixture of 95% HFC-125 and 5% propane is essentially constant-boiling and exhibits only a 3.7% change in vapor pressure after 50% of the original mixture evaporates. Again, the propane concentration decreases so that if the original mixture were nonflammable the mixture would remain nonflammable.

**TABLE 6**

| Sample | % Loss | Comp. (Wt%) | | Vapor Press. | | Press. Change |
|---|---|---|---|---|---|---|
| | | HFC-125 | Propane | (psia) | kPa | (%) |
| IQ | 0 | 75.0 | 25.0 | (236.1) | 1,627.9 | 0 |
| 1 | 0 | 79.0 | 21.0 | (236.1) | 1,627.9 | 0 |
| 2 | 10 | 78.9 | 21.1 | (236.0) | 1,627.2 | 0.04 |
| 3 | 20 | 78.7 | 21.3 | (235.9) | 1,626.5 | 0.08 |
| 4 | 30 | 78.5 | 21.5 | (235.6) | 1,624.4 | 0.21 |
| 5. | 40 | 78.2 | 21.8 | (235.3) | 1,622.3 | 0.34 |
| 6 | 50 | 77.8 | 22.2 | (234.9) | 1,619.6 | 0.51 |
| FQ | 50 | 77.1 | 28.9 | (234.9) | 1,619.6 | 0.51 |

This mixture of 75% HFC-125 and 25% propane is essentially constant-boiling and exhibits only a 0.5% change in vapor pressure after 50% of the original mixture evaporates. However, the propane concentration increases so that even if the original mixture were formulated to be nonflammable the mixture could become flammable upon a vapor leak. Even though this mixture is probably flammable or can become flammable it is essentially constant-boiling and may have several uses, such as a refrigerant where flammability is acceptable, aerosol propellants, heat transfer media, gaseous dielectrics, expansion agents for polyolefins and polyurethanes, and as power cycle working fluids.

**TABLE 7**

| Sample | % Loss | Comp. (Wt%) | | Vapor Press. | | Press. Change |
|---|---|---|---|---|---|---|
| | | HFC-125 | Propane | (psia) | kPa | (%) |
| IQ | 0 | 65.0 | 35.0 | (232.4) | 1,602.3 | 0 |
| 1 | 10 | 75.7 | 24.3 | (231.7) | 1,597.5 | 0.3 |
| 2 | 20 | 75.2 | 24.8 | (230.8) | 1,591.3 | 0.7 |
| 3 | 30 | 74.6 | 25.3 | (229.7) | 1,583.7 | 1.2 |
| 4 | 40 | 73.8 | 26.2 | (227.9) | 1,571.3 | 1.9 |
| 5 | 50 | 72.6 | 27.4 | (225.3) | 1,553.4 | 3.1 |
| FQ | 50 | 52.4 | 47.6 | (225.3) | 1,553.4 | 3.1 |

This mixture of 65% HFC-125 and 35% propane is essentially constant-boiling and exhibits only a 3.1% change in vapor pressure after 50% of the original mixture evaporates. However, the propane concentration increases so that even if the original mixture were formulated to be nonflammable the mixture could become flammable upon a vapor leak. Even though this mixture is probably flammable or can become flammable, it is essentially constant-boiling and may have several uses, such as a refrigerant where flammability is acceptable, aerosol propellants, heat transfer media, gaseous dielectrics, expansion agents for polyofins and polyurethanes, and as power cycle working fluids.

In summary, the data in Tables 4-7 confirm the existence of an azeotropic or azeotrope-like composition consisting essentially of about 65 to 99 weight percent pentafluoroethane and about 1 to 35 weight percent propane, wherein the composition boils at about 25°C when the pressure is adjusted to about 1,558 +/- 68.9 kPa (226 +/- 10 psia).

### HFC-125 and ISOBUTANE

### EXAMPLE 5

A phase study was made on pentafluoroethane and isobutane, wherein the composition was varied and the vapor pressures measured, at a constant temperature of 11.2°C. An azeotropic composition was obtained as evidenced by the maximum vapor pressure observed and was identified as follows:
- Pentafluoroethane = 98.3 weight percent
- Isobutane = 1.7 weight percent
- Vapor pressure = 937.0 kPa (135.9 psia) at 11.2°C

### EXAMPLE 6

The novel azeotropic or azeotrope-like compositions of HFC-125 and isobutane exhibit dew and bubble points with virtually no temperature differentials. As is well known in the art, a small difference between dew point and bubble point temperatures is an indication of the azeotrope-like behavior of mixtures.

A study of dew point and bubble point temperatures for various mixtures indicates that the difference in the dew point and bubble point temperatures of the azeotrope-like mixtures of the instant invention are very small with respect to the differences in dew point and bubble point temperatures of several known, nonazeotropic, binary compositions, namely, (50+50) weight percent mixtures of pentafluoroethane (HFC-125) and 1,1,1,2-tetrafluoroethane (HFC-134a), and (50+50) weight percent mixtures of chlorodifluoromethane (HCFC-22) and 1-chloro-1,1-difluoroethane (HCFC-142b). These data confirm the azeotrope-like behavior of the compositions of this invention.

**TABLE 8**

| Temperatures (°C) at 101.325kPa (14.696 psia) | | | |
|---|---|---|---|
| Refrigerant Composition | Dew Point | Bubble Point | ΔT |
| HFC-125 + HFC-134a (50+50) | -30.5 | -35.7 | 5.2 |
| HCFC-22 + HCFC-142b (50+50) | -18.6 | -28.3 | 9.7 |
| HPC-125 + Isobutane (99+1) | -48.6 | -48.6 | 0.0 |
| HFC-125 + Isobutane (98.3+1.7) | -48.6 | -48.6 | 0.0 |
| HFC-125 + Isobutane (96+4) | -48.4 | -48.5 | 0.1 |
| HFC-125 + Isobutane (95+5) | -48.0 | -48.5 | 0.5 |
| HFC-125 + Isobutane (94+6) | -47.5 | -48.4 | 0.9 |

Compositions of about 94 to 99 weight percent pentafluoroethane and about 1 to 6 weight percent isobutane exhibit differences in dew and bubble points of less than 1°C at atmospheric pressure which indicates that the compositions are essentially constant-boiling.

The more preferred composition according to the instant invention is the azeotrope which comprises about 98.3 weight percent pentafluoroethane and about 1.7 weight percent isobutane, and which boils at 11.2°C at 937.0 kPa (135.9 psia).

### EXAMPLE 7

A study compares the refrigeration properties of the azeotropic mixtures of the invention with Refrigerant-502 and HFC-125. The refrigeration capacity is based on a compressor with a fixed displacement of 0.00165 m3/s (3.5 cubic feet per minute). The data are based on a refrigeration cycle with a suction-line heat exchanger.

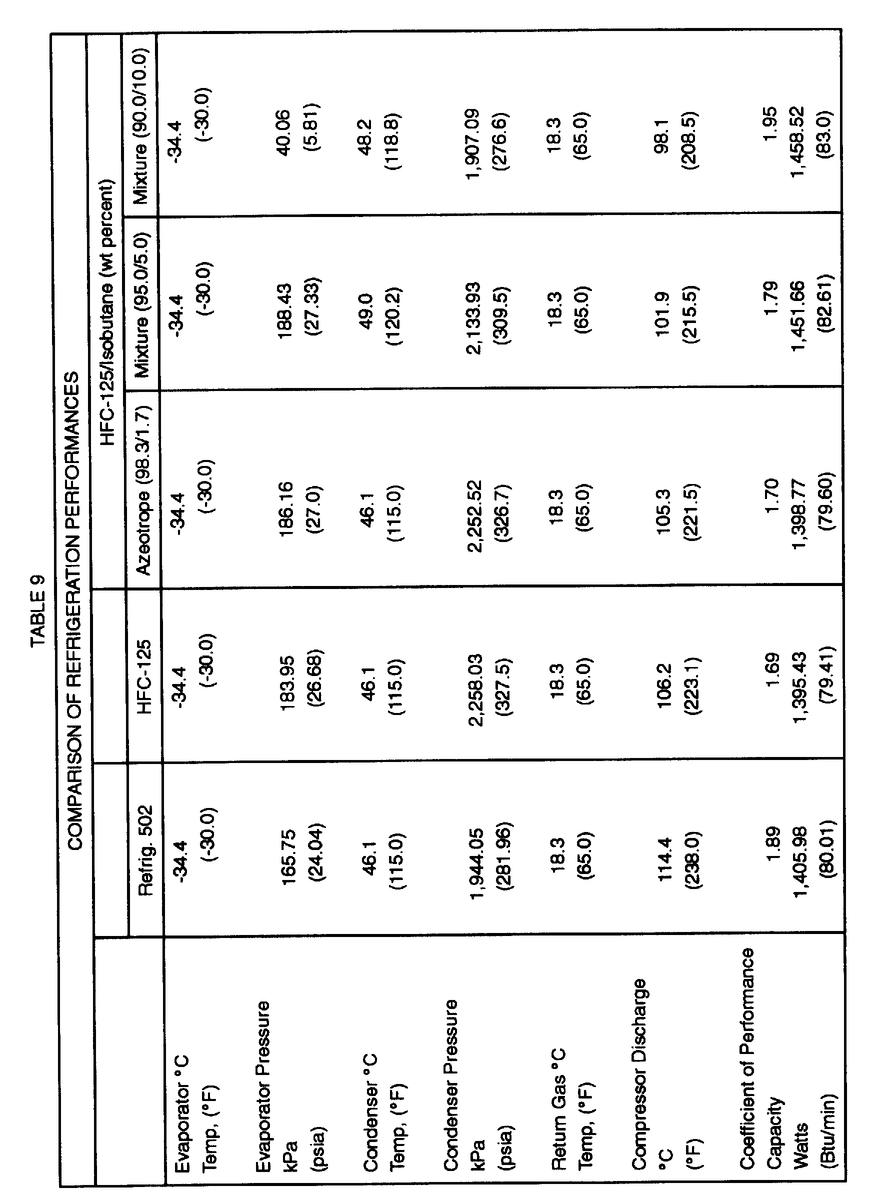

Capacity is intended to mean the change in enthalpy of the refrigerant in the evaporator per 0.4536kg (one pound) of refrigerant circulated, i.e., the heat removed by the refrigerant in the evaporator per time.

Coefficient of performance (COP) is intended to mean the ratio of the capacity to the compressor work. It is a measure of refrigerant energy efficiency.

For a refrigeration cycle typified by the above conditions, both the COP and capacity increase by adding isobutane to HFC-125. Also, the discharge temperature from the compressor decreases by adding isobutane, which is important for increasing the lifetime of the compressor. These results show that mixtures of HFC-125 and isobutane improve capacity, energy efficiency, and discharge temperature of a refrigeration cycle when compared to HFC-125 alone.

### EXAMPLE 8

A phase study on pentafluoroethane and isobutane verifies minimal fractionation and change in vapor pressure and composition during a vapor loss at 25°C. Initial liquid (IQ), final liquid (FQ), vapor composition (1-5), vapor pressure, and change in vapor pressure from the initial vapor pressure are shown for three mixtures.

**TABLE 10**

| Sample | % Loss | Compo. (wt%) | | Vapor Press. | | Press. Change |
|---|---|---|---|---|---|---|
| | | HFC-125 | Isobutane | (PSIA) | kPa | (%) |
| IQ | 0 | 99.0 | 1.0 | (199.5) | 1,375.5 | 0 |
| 1 | 0 | 99.0 | 1.0 | (199.5) | 1,375.5 | 0 |
| 2 | 50 | 99.0 | 1.0 | (199.5) | 1,375.5 | 0 |
| FQ | 50 | 99.0 | 1.0 | (199.5) | 1,375.5 | 0 |

This mixture of 99% HFC-125 and 1% isobutane is essentially constant-boiling and exhibits a 9% change in vapor pressure after 50% of the original mixture evaporates. Also, the isobutane concentration remains constant so that if the original mixture were nonflammable then the mixture would remain nonflammable.

**TABLE 11**

| Sample | % Loss | Comp. (wt%) | | Vapor Press. | | Press. Change |
|---|---|---|---|---|---|---|
| | | HFC-125 | Isobutane | (PSIA) | kPa | (%) |
| IQ | 0 | 95.0 | 5.0 | (198.2) | 1,366.5 | 0 |
| 1 | 0 | 96.2 | 3.8 | (198.2) | 1,366.5 | 0 |
| 2 | 10 | 96.1 | 3.9 | (198.1) | 1,365.9 | 0.05 |
| 3 | 20 | 96.0 | 4.0 | (198.0) | 1,365.2 | 0.1 |
| 4 | 30 | 95.9 | 4.1 | (197.9) | 1,364.5 | 0.15 |
| 5 | 40 | 95.8 | 4.2 | (197.7) | 1,363.1 | 0.25 |
| 6 | 50 | 95.7 | 4.3 | (197.5) | 1,361.7 | 0.35 |
| FQ | 50 | 94.0 | 6.0 | (197.5) | 1,361.7 | 0.35 |

This mixture of 95% HFC-125 and 5% isobutane is essentially constant-boiling and exhibits only a 0.35% change in vapor pressure after 50% of the original mixture evaporates. However, the isobutane concentration increases so that even if the original mixture were formulated to be nonflammable, the mixture could become flammable upon a vapor leak. Even though this mixture could become flammable, it is essentially constant-boiling and may have several uses, such as a refrigerant where flammability is acceptable, aerosol propellants, heat transfer media, gaseous dielectrics, expansion agents for polyolefins and polyurethanes, and as power cycle working fluids.

**TABLE 12**

| Sample | % Loss | Compo. (Wt%) | | Vapor Press. | | Press. Change |
|---|---|---|---|---|---|---|
| | | HFC-125 | Isobutane | (psia) | kPa | (%) |
| IQ | 0 | 90.0 | 10.0 | (194.5) | 1,341.0 | 0 |
| 1 | 0 | 94.2 | 5.8 | (194.5) | 1,341.0 | 0 |
| 2 | 10 | 94.1 | 5.9 | (194.1) | 1,338.3 | 0.2 |
| 3 | 20 | 93.9 | 6.1 | (193.6) | 1,334.8 | 0.5 |
| 4 | 30 | 93.7 | 6.3 | (193.0) | 1,330.7 | 0.8 |
| 5 | 40 | 93.5 | 6.5 | (192.2) | 1,325.2 | 1.2 |
| 6 | 50 | 93.1 | 6.9 | (191.1) | 1,317.6 | 1.7 |
| FQ | 50 | 85.9 | 14.1 | (191.1) | 1,317.6 | 1.7 |

This mixture of 90% HFC-125 and 10% isobutane is essentially constant-boiling and exhibits only a 1.7% change in vapor pressure after 50% of the original mixture evaporates. Again, the isobutane concentration increase so that even if the original mixture were formulated to be nonflammable the mixture could become flammable upon a vapor leak. Even though this mixture is probably flammable or can become flammable it is essentially constant-boiling and may have several uses such as a refrigerant where flammability is acceptable, aerosol propellants, heat transfer media, gaseous dielectrics, expansion agents for polyolefins and polyurethanes, and as power cycle working fluids.

In summary, the data in Tables 10 - 12 confirm the existence of an azeotropic or azeotrope-like composition consisting essentially of about 90 to 99 weight percent pentafluoroethane and about 1 to 10 weight percent isobutane, wherein the composition boils at a temperature of about 25°C when the pressure is adjusted to about 1,344 +/- 34.5 kpa (195 +/- 5 psia).

The novel azeotropic or azeotrope-like mixtures of HFC-125 and propane or HFC-125 and isobutane may be used to produce refrigeration by condensing the mixtures and thereafter evaporating the condensate in the vicinity of a body to be cooled.

The novel azeotropic or azeotrope-like mixtures may also be used to produce heat by condensing the refrigerant in the vicinity of the body to be heated and thereafter evaporating the refrigerant.

The use of azeotropic or azeotropic-like mixtures eliminates the problem of component fractionation and handling in system operations, because these mixtures behave essentially as a single substance. Several of the novel azeotrope-like mixtures also offer the advantage of being essentially nonflammable.

The novel azeotropic or azeotrope-like mixtures have zero ozone depletion potentials compared with refrigerant 502, which has a 0.23 ozone depletion potential. The aforementioned data were taken from Scientific Assessment of Stratospheric Ozone, 1989", UNEO/WMO AFEAS Report, September 5, 1989.

In addition to refrigeration applications, the novel constant boiling compositions of the invention are also useful as aerosol propellants, heat transfer media, gaseous dielectrics, fire extinguishing agents, expansion agents for polyolefins and polyurethanes and as power cycle working fluids.

Additives such as lubricants, corrosion inhibitors, stabilizers, dyes and other appropriate materials may be added to the novel compositions of the invention for a variety of purposes provided they do not have an adverse influence on the composition, for their intended applications.

## Claims

1. A binary azeotropic or azeotrope-like composition comprising effective amounts of pentafluoroethane and propane such that the difference in dew point temperature and bubble point temperature of the composition at atmospheric pressure is less than or equal to one degree Celsius.

2. An azeotropic or azeotrope-like composition comprising effective amounts of pentafluoroethane and isobutane such that the difference in dew point temperature and bubble point temperature of the composition at atmospheric pressure is less than or equal to one degree Celsius.

3. A binary azeotropic or azeotrope-like composition comprising effective amounts of pentafluoroethane and propane such that when 50 weight percent of the composition is removed, the difference in the vapor pressure of the original composition and the vapor pressure of remaining composition is 10 percent or less.

4. An azeotropic or azeotrope-like composition comprising effective amounts of pentafluoroethane and isobutane such that when 50 weight percent of the composition is removed, the difference in the vapor pressure of the original composition and the vapor pressure of remaining composition is 10 percent or less.

5. An azeotropic or azeotrope-like composition consisting of about 65 to 99 weight percent pentafluoroethane and about 1 to 35 weight percent propane, wherein the composition boils at about 25°C when the pressure is adjusted to about 1558 kPa (226 psia).

6. An azeotropic or azeotrope-like composition consisting essentially of about 79.4 weight percent pentafluoroethane and about 20.6 weight percent propane wherein the composition boils at about -14°C when the pressure is adjusted to about 521.2 kPa (75.6 psia).

7. An azeotropic or azeotrope-like composition consisting essentially of about 90 to 99 weight percent pentafluoroethane and about 1 to 10 weight percent isobutane, wherein the composition boils at a temperature of about 25°C when the pressure is adjusted to about 1344.3 kPa (195 psia).

8. An azeotropic or azeotrope-like composition consisting essentially of about 98.3 weight percent pentafluoroethane and about 1.7 weight percent isobutane wherein the composition boils at a temperature of about 11.2°C when the pressure is adjusted to about 936.9 kPa (135.9 psia).

9. A process for producing refrigeration, comprising condensing an azeotropic or azeotrope-like composition of any of claims 1 to 8, and thereafter evaporating said composition in the vicinity of a body to be cooled.

10. A process for producing heat comprising condensing an azeotropic or azeotrope-like composition of any one of claims 1 to 8 in the vicinity of a body to heated, and thereafter evaporating said composition.

11. A process for preparing a polymer foam from a polymer foam formulation utilizing an effective amount of the compositions of any of claims 1 to 8 as the blowing agent.

12. A process for preparing aerosol formulations wherein active ingredients are combined in an aerosol container with an effective amount of an azeotropic or azeotrope-like composition of any one of claims 1 to 8.

## Patentansprüche

1. Binäre azeotrope oder azeotropartige Zusammensetzung, umfassend wirksame Mengen an Pentafluorethan und Propan, so daß der Unterschied zwischen Tau- und Blasenpunkttemperatur der Zusammensetzung bei Atmosphärendruck 1 °C oder weniger beträgt.

2. Azeotrope oder azeotropartige Zusammensetzung, umfassend wirksame Mengen an Pentafluorethan und Isobutan, so daß der Unterschied zwischen Tau- und Blasenpunkttemperatur der Zusammensetzung bei Atmosphärendruck 1 °C oder weniger beträgt.

3. Binäre azeotrope oder azeotropartige Zusammensetzung, umfassend wirksame Mengen an Pentafluorethan und Propan, so daß, wenn 50 Gew.-% der Zusammensetzung entfernt werden, der Unterschied zwischem dem Dampfdruck der ursprünglichen Zusammensetzung und dem Dampfdruck der verbleibenden Zusammensetzung 10 % oder weniger beträgt.

4. Azeotrope oder azeotropartige Zusammensetzung, umfassend wirksame Mengen an Pentafluorethan und Isobutan, so daß, wenn 50 Gew.-% der Zusammensetzung entfernt werden, der Unterschied zwischen dem Dampfdruck der ursprünglichen Zusammensetzung und dem Dampfdruck der verbleibenden Zusammensetzung 10 % oder weniger beträgt.

5. Azeotrope oder azeotropartige Zusammensetzung, bestehend aus etwa 65 bis 99 Gew.-% Pentafluorethan und etwa 1 bis 35 Gew.-% Propan, wobei die Zusammensetzung bei etwa 25 °C siedet, wenn der Druck auf etwa 1558 kPa (226 psia) eingestellt ist.

6. Azeotrope oder azeotropartige Zusammensetzung, bestehend im wesentlichen aus etwa 79,4 Gew.-% Pentafluorethan und etwa 20,6 Gew.-% Propan, wobei die Zusammensetzung bei etwa -14 °C siedet, wenn der Druck auf etwa 521,2 kPa (75,6 psia) eingestellt ist.

7. Azeotrope oder azeotropartige Zusammensetzung, bestehend im wesentlichen aus etwa 90 bis 99 Gew.-% Pentafluorethan und etwa 1 bis 10 Gew.-% Isobutan, wobei die Zusammensetzung bei einer Temperatur von etwa 25 °C siedet, wenn der Druck auf etwa 1344,3 kPa (195 psia) eingestellt ist.

8. Azeotrope oder azeotropartige Zusammensetzung, bestehend im wesentlichen aus etwa 98,3 Gew.-% Pentafluorethan und etwa 1,7 Gew.-% Isobutan, wobei die Zusammensetzung bei einer Temperatur von etwa 11,2 °C siedet, wenn der Druck auf etwa 936,9 kPa (135,9 psia) eingestellt ist.

9. Verfahren zur Erzeugung von Kühlung, umfassend die Kondensation einer azeotropen oder azeotropartigen Zusammensetzung nach einem der Ansprüche 1 bis 8 und anschließend die Verdampfung der Zusammensetzung in der Nähe eines zu kühlenden Körpers.

10. Verfahren zur Erzeugung von Wärme, umfassend die Kondensation einer azeotropen oder azeotropartigen Zusammensetzung nach einem der Ansprüche 1 bis 8 in der Nähe eines zu erhitzenden Körpers und anschließend die Verdampfung der Zusammensetzung.

11. Verfahren zur Herstellung eines Polymerschaumes aus einer Polymerschaumformulierung, wobei eine wirksame Menge der Zusammensetzungen nach einem der Ansprüche 1 bis 8 als Blähmittel verwendet wird.

12. Verfahren zur Herstellung von Aerosolformulierungen, bei welchem die Wirkstoffe in einem Aerosolbehälter mit einer wirksamen Menge einer azeotropen oder azeotropartigen Zusammensetzung nach einem der Ansprüche 1 bis 8 kombiniert werden.

## Revendications

1. Composition binaire azéotropique ou semblable à un azéotrope, comprenant des quantités efficaces de pentafluoroéthane et de propane telles que la différence entre la température du point de rosée et la température du point de bulle de la composition à la pression atmosphérique soit inférieure ou égale à un degré Celsius.

2. Composition azéotropique ou semblable à un azéotrope, comprenant des quantités efficaces de pentafluoroéthane et d'isobutane telles que la différence entre la température du point de rosée et la température du point de bulle de la composition à la pression atmosphérique soit inférieure ou égale à un degré Celsius.

3. Composition azéotropique ou semblable à un azéotrope, comprenant des quantités efficaces de pentafluoroéthane et de propane telles que lorsque 50 % en poids de la composition sont enlevés, la différence entre la pression de vapeur de la composition d'origine et la pression de vapeur de la composition restante soit de 10 % ou moins.

4. Composition azéotropique ou semblable à un azéotrope, comprenant des quantités efficaces de pentafluoroéthane et d'isobutane telles que lorsque 50 % en poids de la composition sont enlevés, la différence entre la pression de vapeur de la composition d'origine et la pression de vapeur de la composition restante soit de 10 % ou moins.

5. Composition azéotropique ou semblable à un azéotrope, constituée d'environ 65 à 99 % en poids de pentafluoroéthane et d'environ 1 à 35 % en poids de propane, la composition bouillant à environ 25°C lorsque la pression est ajustée à environ 1558 kPa.

6. Composition azéotropique ou semblable à un azéotrope, essentiellement constituée d'environ 79,4 % en poids de pentafluoroéthane et d'environ 20,6 % en poids de propane, la composition bouillant à environ -14°C lorsque la pression est ajustée à environ 521,2 kPa.

7. Composition azéotropique ou semblable à un azéotrope, essentiellement constituée d'environ 90 à 99 % en poids de pentafluoroéthane et d'environ 1 à 10 % en poids d'isobutane, la composition bouillant à une température d'environ 25°C lorsque la pression est ajustée à environ 1344,3 kPa.

8. Composition azéotropique ou semblable à un azéotrope, essentiellement constituée d'environ 98,3 % en poids de pentafluoroéthane et d'environ 1,7 % en poids d'isobutane, la composition bouillant à une température d'environ 11,2°C lorsque la pression est ajustée à environ 936,9 kPa.

9. Procédé pour produire de la réfrigération, comprenant la condensation d'une composition azéotropique ou semblable à un azéotrope selon l'une quelconque des revendications 1 à 8, puis l'évaporation de ladite composition dans le voisinage d'un corps devant être refroidi.

10. Procédé pour produire de la chaleur, comprenant la condensation d'une composition azéotropique ou semblable à un azéotrope selon l'une quelconque des revendications 1 à 8 dans le voisinage d'un corps devant être chauffé, puis l'évaporation de ladite composition.

11. Procédé pour préparer une mousse polymère à partir d'une formulation de mousse polymère utilisant une quantité efficace des compositions selon l'une quelconque des revendications 1 à 8 en tant qu'agent gonflant.

12. Procédé pour préparer des formulations aérosols, dans lequel des ingrédients actifs sont combinés dans un récipient aérosol avec une quantité efficace d'une composition azéotropique ou semblable à un azéotrope selon l'une quelconque des revendications 1 à 8.
